# EUROPÄISCHE PATENTSCHRIFT

(11) **EP 3 369 708 B1**
(45) Veröffentlichungstag und Bekanntmachung des Hinweises auf die Patenterteilung: **03.01.2024**
(21) Anmeldenummer: 18159528.1
(22) Anmeldetag: 01.03.2018
(51) Int. Cl.: C02F 1/00, C02F 1/68, C02F 103/02, C02F 103/42

(54) **ANLAGE ZUR WASSERANALYSE UND WASSERKONDITIONIERUNG**
INSTALLATION FOR ANALYSING WATER AND THE CONDITIONING OF WATER
INSTALLATION D'ANALYSE D'EAU ET CONDITIONNEMENT D'EAU

(30) Priorität: 03.03.2017 DE 102017203532
(43) Veröffentlichungstag der Anmeldung: 05.09.2018
(73) Patentinhaber: Carela GmbH, 79618 Rheinfelden (DE)
(72) Erfinder: KRUMREY, Bernd, 79591 Eimeldingen (DE); REISGYS, Michael, 4132 Muttenz (CH); HOEGER, Pascal, 41464 Neuss (DE)
(74) Vertreter: Friese Goeden Patentanwälte PartGmbB

(56) Entgegenhaltungen:
- EP-A1- 0 551 761
- DE-A1-102011 105 475
- US-A1- 2009 107 921
- US-A1- 2016 273 786

## Beschreibung

Die Erfindung betrifft eine Anlage zur eigenständigen Überprüfung der Qualität und zum Konditionieren von Wasser, und zwar sowohl von Trinkwasser als auch Betriebs- bzw. Brauchwasser sowie Schwimm- und Badebeckenwasser. Sie ermöglicht es, die für den jeweiligen Verwendungszweck relevanten Wasserparameter, einschließlich mikrobiologischer Parameter, zu überwachen und durch dosierte Zugabe von geeigneten, zweckentsprechenden Mitteln, üblicherweise von wässrigen Lösungen geeigneter chemischer Substanzen, oder erforderlichenfalls auch durch Einleitung geeigneter Abtrennmaßnahmen für anschließende analytische Spezialuntersuchungen (z.B. von Anreicherungs-, Sampling- und/oder Filtrationsschritten) die Einhaltung der gewünschten Wasserqualität kontinuierlich zu gewährleisten. Die Anlage ist insbesondere als vorgefertigte, an den Verwendungszweck und den vorgesehenen Einsatzort angepasste modulartige abgeschlossene schrankartige Einheit ausgeführt und ermöglicht eine Überwachung und Steuerung ihrer Funktion durch Datenfernübertragung.

Es erscheint an dieser Stelle nützlich, die für das Funktionieren menschlicher Gesellschaften essentiellen Wassertypen, insbesondere Trinkwasser und Betriebs- oder Brauchwasser, kurz getrennt zu charakterisieren:
Als "Trinkwasser" wird Wasser für den menschlichen Gebrauch bezeichnet, das für einen direkten Kontakt mit dem menschlichen Körper bestimmt ist, geeignet ist, getrunken zu werden und das für den Menschen wichtigste Lebensmittel darstellt. Der Begriff "Trinkwasser" erstreckt sich definitionsgemäß auch auf Duschwasser und Gartenwasser. Es ist für die Gesundheit der Bevölkerung entscheidend, dass Trinkwasser dem Endverbraucher in einem einwandfreien Zustand zur Verfügung gestellt werden kann. Das heißt, dass der Gehalt an chemischen Inhaltsstoffen und die mikrobiologischen Eigenschaften des Trinkwassers so beschaffen sein müssen, dass Menschen durch seinen Konsum nicht nachteilig beeinträchtigt werden oder gar erkranken können. Es ist dabei wichtig, dass Trinkwasser auf dem Weg von seiner Aufbereitung bis zum Wasserhahn des Kunden diesen einwandfreien Zustand behält. Trinkwasser ist von Natur aus nicht keimfrei. Damit es auf dem Weg von der Aufbereitung zum Verbraucher nicht zu einer unkontrollierten und unzulässigen Keimvermehrung kommt, existieren genaue technisch-rechtliche Vorgaben, die als allgemein anerkannte Regeln der Technik (a.a.R.d.T.) für den Bau und Betrieb von Trinkwasseranlagen, -rohrleitungen und -netzen einzuhalten sind. Zu den einzuhaltenden Vorgaben gehört auch eine Chemikalienverbotsverordnung, die die Zulässigkeit der Verwendung bestimmter Chemikalien als Wasserzusatz und den Umgang mit derartigen Chemikalien unter Sicherheitsaspekten regelt.

An Betriebs- oder Brauchwasser werden andere Reinheitsanforderungen gestellt. Es handelt sich um Wasser, das für eine bestimmte technische, gewerbliche oder hauswirtschaftliche Anwendung bestimmt ist, und beispielsweise Rohwasser in Form von Oberflächenwasser (Regenwasser, Flusswasser) oder Brunnenwasser, aber auch aufbereitetes Grauwasser oder wiederverwendetes Prozesswasser sein kann. Es spielt in gewerblichen und industriellen Prozessen als Wärmeüberträger insbesondere als Kühlwasser eine bedeutende Rolle. Auch bei einer solchen Verwendung ist ein mikrobiologisches Management der Keimzahlen nötig. Mikroorganismen können Korrosionen an den metallenen wasserberührten Oberflächen verursachen, die sogenannte mikrobiologisch induzierte Korrosion. Keime können auch in Aerosoltröpfchen (sogenannten Bioaerosolen) enthalten sein, welche durch offene Kühlsysteme wie beispielsweise Kühltürme in die Umgebungsluft abgegeben werden und beim Einatmen im Falle von Legionellen oder Pseudomonaden Menschen gesundheitlich schwer beeinträchtigen können. Gleichzeitig ist ein chemisches und technisches Management von Wasserparametern, Wasserinhaltsstoffen und - konditionierungsmitteln erforderlich um z. B. Korrosionsvorgänge oder unerwünschte Anhaftungen, Ausfällungen und Verblockungen in Rohrleitungen und anderen Anlagenteilen zu minimieren. Zu einem solchen Management gehören die Kontrolle des pH-Wertes, die Kontrolle des anorganischen Ionengehaltes (Salzgehalts) über den Leitwert, die Kontrolle spezieller Zusätze, wie Korrosionsinhibitoren, pH-Wert-Stabilisatoren, mikrobizid wirkender Stoffe, Entschäumer und anderes mehr. Verschieben sich während des Betriebes einer Betriebs- oder Brauchwasseranlage die genannten Parameter aus dem Sollbereich, ist es erforderlich, z.B. durch Entfernen von Teilmengen des Wassers und dosierte Zugabe von Frischwasser, und/oder durch Zugabe von geeigneten chemischen Produkten und Änderungen der Betriebsverfahren diese Parameter wieder ins Optimum für die vorgesehene Verwendung des Betriebs- oder Brauchwassers zu steuern.

Als weitere Art von Wasser, das kein Trinkwasser ist und unter Verwendung einer Wasserkonditionierungsanlage, wie sie Gegenstand der vorliegenden Anmeldung ist, behandelt werden kann, ist Schwimm- und Badebeckenwasser zu erwähnen, für das in der Schwimm- und Badebeckenwasserverordnung spezielle behördliche Vorgaben existieren. Im Infektionsschutzgesetz (IfSG) wird in § 37 Absatz 2 die wichtigste Anforderung an die Beschaffenheit von Schwimm- und Badebeckenwasser gestellt: "Schwimm- oder Badebeckenwasser in Gewerbebetrieben, öffentlichen Bädern sowie in sonstigen nicht ausschließlich privat genutzten Einrichtungen muss so beschaffen sein, dass durch seinen Gebrauch eine Schädigung der menschlichen Gesundheit, insbesondere durch Krankheitserreger, nicht zu besorgen ist." Die Aufbereitung von Schwimm- und Badebeckenwasser muss so erfolgen, dass jederzeit in allen Beckenbereichen die Anforderungen des § 37 Absatz 2 IfSG erfüllt sind. Bei den Bädern, die normgerecht gebaut und betrieben werden, in denen die Wasseraufbereitung den allgemein anerkannten Regeln der Technik (a.a.R.d.T.) entspricht und bei denen insbesondere die Durchströmung, Aufbereitung und Betriebskontrolle normgerecht erfolgen (DIN 19643:2012-11), kann davon ausgegangen werden, dass eine hygienisch einwandfreie Wasserbeschaffenheit erzielt wird. Diese Anforderungen sind im Rahmen der allgemeinen Verkehrssicherungspflicht durch den Betreiber sicherzustellen und werden durch das Gesundheitsamt überwacht.

Bei Schwimm- und Badebeckenwasser haben Filterrückspülungen und Filterdesinfektion, z.B. mit dem dafür zugelassenen Chlordioxid sowie gegebenenfalls Wasserstoffperoxid, besondere Bedeutung. Wenn im Rahmen der vorliegenden Anmeldung von "Betriebswasser" gesprochen wird, soll dieser Begriff, in Abgrenzung von Trinkwasser, grundsätzlich auch Schwimm- und Badebeckenwasser umfassen.

Zur Gewährleistung der vorgeschriebenen mikrobiologischen Qualität darf Trinkwasser desinfiziert werden. Die Zahl der für die Desinfektion von Trinkwasser zugelassenen chemischen Substanzen ist jedoch sehr beschränkt. Zugelassene Desinfektionswirkstoffe mit Depotwirkung sind Chlor, Chlorverbindungen wie Natrium- oder Calciumhypochlorit und Chlordioxid. Alle genannten Wirkstoffe sind Gefahrstoffe, teilweise mit "giftig" oder "sehr giftig" gekennzeichnet. Beim Umgang mit diesen Stoffen sind daher aufwendige Arbeitsschutz-, Transport- und Lagervorschriften einzuhalten. Für den Zusatz dieser Stoffe zu Trinkwasser werden besondere Dosiertechniken mit den entsprechenden Sicherheitseinrichtungen gebraucht. Maximale Zugabemengen und Grenzwerte im Trinkwasser sind behördlich festgelegt. Die Grenzwerte müssen eingehalten werden, was eine entsprechend aufwendige chemisch-analytische Überwachung des so behandelten Trinkwassers erfordert.

Für Betriebs- und Brauchwasser, insbesondere Kühlwasser gibt es ein breiteres Spektrum zugelassener mikrobizider Wirkstoffe. Es sind einmal die gleichen wie im Trinkwasserbereich, darüber hinaus aber auch zusätzlich weitere, wie beispielsweise Wasserstoffperoxid, Isothiazolinone, Quats, Halogenabspalter wie Triclosan und Symclosan und andere Wirkstoffe. Als Zusätze für den Korrosionsschutz finden beispielsweise Phosphate, Silikate und Molybdate Anwendung. Zur Sequestrierung und Verhinderung der Kalkabscheidung werden Phosphonate, Polyphosphate und Salze organischer Polysäuren, wie z. B. das Natriumsalz der Polyasparaginsäure, eingesetzt. Alle diese chemischen Zusätze sind auch in Form von dosierbaren Lösungen erhältlich und als solche nicht Gegenstand dieser Anmeldung.

Es gehört zum bekannten Stand der Technik, flüssige Wirkstoffe der oben beschriebenen Art aus Vorratsbehältern für diese Wirkstoffe (chemischen Zusätze) mittels mengenproportional- oder wasserparameter-steuerbaren Dosierpumpen in Trink- oder Betriebswasser einzudosieren. Jedoch benötigen die bekannten Anlagen eine regelmäßige Überwachung vor Ort, wie beispielsweise die regelmäßige Kontrolle des Füllstandes der Vorratsbehälter für die chemischen Zusätze, die Kontrolle der Dosiereinrichtung auf korrekte Funktion, Dichtigkeit und Verschleiß sowie die Überprüfung und Kalibrierung der Messwertaufnehmer.

Ändern sich durch technische Rahmenbedingungen, durch rechtliche Bestimmungen oder durch gesundheitsamtlichen Beschluss Vorgabe- und Grenzwerte für dosierte Wirkstoffe, ist es erforderlich, dass die bisher installierten Dosieranlagen vor Ort geprüft und manuell entsprechend justiert werden müssen.

Handelsübliche Dosieranlagen sind oftmals unverschlossen und leicht zugänglich angebracht. Bei Dosierflüssigkeiten, welche als solche als Gefahrstoffe (giftig) eingestuft sind, oder welche Edukte oder Precursoren zur Bildung solcher Gefahrstoffe, z.B. durch in situ Reaktionen, enthalten und die strengen rechtlichen Bestimmungen unterworfen sind, kann bei solchen Anlagen ein Missbrauch der eingesetzten Gifte durch Unbefugte nicht ausgeschlossen werden.

Offene Dosieranlagen in Innenräumen bergen außerdem bei Leckagen die Gefahr, dass beim Einsatz von Flüssigkeiten, welche giftige Gase oder Dämpfe freisetzen, wie z.B. im Falle von Chlordioxidlösungen, diese Gase in die Raumluft entweichen und anwesende Personen gesundheitlich schädigen können. Das Aufstellen derartiger Anlagen im Freien ist aufgrund von Witterungseinflüssen und erleichtertem unbefugtem Zugriff keine Option. Hohe Temperaturen im Sommer bedingen insbesondere bei Chlordioxidlösung Stabilitätseinbußen und Konzentrationsveränderungen, die eine exakte Dosierung erschweren, und tiefe Temperaturen im Winter können zu Frostschäden an den flüssigkeitsberührten Anlagenteilen führen. Im Falle von erheblichen Temperaturschwankungen wird auch die Messgenauigkeit der zur Messung der Wasserparameter verwendeten Messwertgeber und Sensoren beeinflusst, und die dosierten Stoffmengen und/oder Volumina können abweichend von den Vorgaben variieren.

US 2016/273786 A1 offenbart eine Anlage zur überwachten Zudosierung von einem chemischen Zusatz in einer Rohrleitung hinein. DE 10 2011 105475 A1 offenbart ein Gehäuse das wärmeisolierte ist und Mittel zur Temperierung aufweist, um Temperaturschwankungen im Innenraum zu vermeiden.

Es ist Aufgabe der Erfindung, unter völliger oder wenigstens weitgehender Vermeidung der beschriebenen Nachteile von bekannten Anlagen zur Wasseranalyse und Wasserkonditionierung eine neuartige Anlage zu schaffen, die als modulartige Schrankeinheit vorgefertigt werden kann, in existierende Rohrleitungssysteme für Trink- oder Betriebswasser integriert (eingeschaltet) werden kann, den Aufwand für Inspektionen vor Ort und manuelle Justierungen minimiert und die es ermöglicht, wässrige Lösungen von chemischen Zusätzen, auch von Gefahrstoffen und potentiell giftigen Stoffen, zuverlässig und vorschriftenkonform zu überwachen und vor unbefugtem Zugriff geschützt vorzuhalten. Weitere Aufgaben ergeben sich für den Fachmann aus den Vorteilen einer erfindungsgemäßen Anlage, wie sie anhand eines Ausführungsbeispiels unter Bezugnahme auf ein Anlagenschema näher erläutert werden.

Die Grundelemente einer erfindungsgemäßen Wasserkonditionierungsanlage, die in ihrer Zusammenwirkung eine Lösung der genannten Aufgabe ermöglichen, werden durch die beigefügten Ansprüche wiedergegeben. Die Erfindung ist eine Anlage nach Anspruch 1. Bevorzugte Ausführungsformen der Erfindung sind in den abhängigen Ansprüchen definiert.

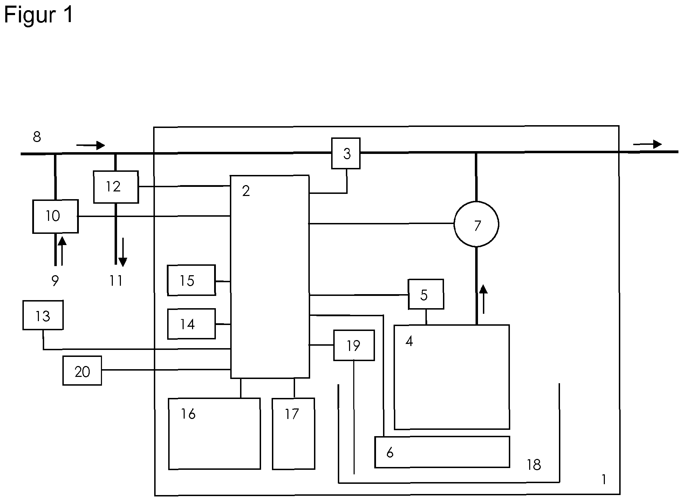

Die Figur 1 zeigt ein Schema einer Ausführungsform einer erfindungsgemäßen Wasserkonditionierungsanlage für die Dosierung einer einzigen wässrigen Lösung eines chemischen Zusatzes, z.B. einer wässrigen Lösung von Chlordioxid, in eine Rohrleitung für ein Betriebswasser mit den erforderlichen oder für den praktischen Betrieb nützlichen Anlagenelementen.

Im Schema der Anlage gemäß der Figur 1 bezeichnet das Bezugszeichen 1 ein verschließbares Gehäuse, in dessen Innenraum ein Abschnitt einer Rohrleitung 8 für ein zu konditionierendes Wasser, im gezeigten Fall Betriebswasser, angeordnet ist. Die äußeren Abschnitte der wasserführenden Rohrleitung 8 sind in der Regel mit Hilfe von geeigneten Anschlussstutzen in einer Wand des Gehäuses 1 mit einem im Gehäuse angeordneten Rohrleitungsabschnitt verbunden. Sie treten an einer Stelle in das Gehäuse 1 ein und verlassen das Gehäuse 1 auf ähnliche Weise an anderer Stelle wieder. Der Rohrleitungsabschnitt im Gehäuse 1 kann z.B. eine gerade Rohrleitungsstrecke zwischen Ein- und Austrittsstellen in zwei verschiedenen, z.B. gegenüber liegenden, Gehäusewänden sein, ist jedoch vorteilhafter Weise eine Rohrleitungsschleife, die über benachbarte Ein- und Austrittsstellen in der gleichen Gehäusewand mit den Rohrleitungsabschnitten außerhalb des Gehäuses verbunden ist und die eine Gesamtlänge im Gehäuse aufweist, die erheblich länger ist als eine gerade Dimension des Gehäuses.

Im Abschnitt der Wasserrohrleitung im Gehäuse 1 ist mindestens ein Messwertaufnehmer 3 angeordnet, der mindestens einen zu überwachenden chemischen und/oder physikalischen und/oder mikrobiologischen Wasserparameter misst. Der Ausgang des Messwertaufnehmers 3 ist mit einer Steuereinheit 2 mit Fernüberwachung verbunden und liefert an diese kontinuierlich oder in einem vorgegebenen Zeittakt die gewonnen Messwerte zur Verarbeitung und Weiterleitung durch die Steuereinheit 2. Die Steuereinheit 2 sorgt für eine Betätigung einer Dosierpumpe 7, mittels derer aus einem Vorratsbehälter 4 eine dosierte Menge einer Lösung einer zu dosierenden Substanz in die Rohrleitung eindosiert wird, bevor diese aus dem Gehäuse 1 austritt. Bei einem in der Praxis besonders wichtigen Fall ist die in das Wasser zu dosierende Substanz eine wässrige Lösung von Chlordioxid.

Der Vorratsbehälter 4 ist mit einer oder mehreren Einrichtungen zur Überwachung seines Füllzustands versehen, z.B. mit einem direkten Füllstandsanzeiger 5 und/oder mit einer Wägeeinrichtung 6, die das aktuelle Gewicht des Vorratsbehälters 4 mit Inhalt erfasst. Die vom Füllstandsanzeiger 5 und/oder der Wägeeinrichtung 6 ermittelten Messwerte werden als elektrische Signale der Steuereinheit 2 zugeführt. Vorteilhafter Weise ist der Vorratsbehälter 4 in oder über einer Sicherheitswanne 18 angeordnet, die im Falle einer Leckage oder anderen Havarie eine gegebenenfalls aus dem Vorratsbehälter 4 ausgetretene Lösung auffängt. Wenn Lösung in die Sicherheitswanne gelangt, wird diese Tatsache von einem Sensor zur Flüssigkeitsdetektion 19 entdeckt und ebenfalls an die Steuereinheit 2 gemeldet, die ihrerseits eine Meldung über den Flüssigkeitsaustritt an die externe (räumlich entfernte) Wartungsstation weiterleitet.

Im Gehäuse 1 ist vorzugsweise außerdem zur Klimatisierung der Atmosphäre des Innenraums (Aufrechterhaltung stabiler Temperatur- und Feuchtigkeitsbedingungen) eine Heiz- und/oder Kühleinrichtung 17 anordnet, sowie eine Absorber- oder Filtereinheit 16, die ein dem Fachmann an sich bekanntes geeignetes Material enthält, das potentiell aus der Lösung im Vorratsbehälter freigesetzte Gase, insbesondere reizende oder gesundheitsschädliche Gase, bindet, unschädlich macht und diese aus dem Gehäuseinnenraum entfernt und ihren Austritt aus dem Gehäuse 1 in die Umgebung verhindert. Auch die Heiz- und/oder Kühleinrichtung 17 sowie die Filtereinheit 16 sind vorzugsweise mit Messwertaufnehmern ausgestattet, die mit der Steuereinheit 2 elektrisch verbunden sind und eine Überwachung und Steuerung ihrer Funktion durch Signale von der Steuereinheit 2 ermöglichen.

An der Steuereinheit 2 sind ferner Schnittstellen (Stecker) 14 für den zeitweisen Anschluss eines externen Computers (Laptops) vorgesehen, sowie eine Beleuchtungseinrichtung 15 für den Innenraum des Gehäuses.

Die Steuereinheit 2 ist über eine geeignete elektrische Leitungsverbindung (Anschlüsse) mit einer Stromquelle 20 außerhalb des Gehäuses 1 verbunden und außerdem mit einer Antenne 13 ausgestattet, die die Übermittlung der aktuellen Daten der Messwertaufnehmer aus dem Innenraum des Gehäuses 1, z.B. zur Wasserqualität und zum Füllstand des Vorratsbehälters 4 sowie ggf. zum Zustand der Sicherheits-Auffangwanne, über eine Datenfernübertragung an eine externe Überwachungs- und Wartungsstation erleichtert.

Die im Schema gemäß der Figur gezeigte beispielhafte Anlage ist ferner dadurch als Anlage zur Konditionierung von Betriebs- bzw. Brauchwasser erkennbar, als die Rohrleitung 8 im Zuleitungsabschnitt vor dem Gehäuse 1 zur Veränderung bzw. Korrektur der Wasserzusammensetzung mit einer Zufuhr (Ventil) 10 für Frischwasser 9 sowie einem Abzugsventil 12 zur Abzweigung von Teilmengen des Wassers 11 aus der Rohrleitung 8 versehen ist. Auch die Frischwasserzufuhr 10 sowie der Wasserabzug 12 aus der Rohrleitung 8 können anhand von elektrischen Signalen, die von einem Messwertaufnehmer wie z.B. dem Messwertaufnehmer 3 geliefert werden, mittels der Steuereinheit 2 gesteuert werden.

Konditionierungsanlagen für Trinkwasser sind einfacher aufgebaut und weisen keine den Anlagenteilen 9 bis 12 entsprechenden zusätzlichen Zweige und Ventile für zusätzliches Frischwasser und eine Entnahme von Wasser-Teilmengen auf.

Aus Gründen einer vereinfachten Darstellung enthält die im Schema gezeigte Anlage nur einen Vorratsbehälter 4 und eine einzige Dosierpumpe 7 für den Zusatz einer einzigen Konditionierlösung. Es ist jedoch vorgesehen, die Zahl der Messwertaufnehmer, Vorratsbehälter sowie ggf. Dosierpumpen zu erhöhen, wenn durch Zusatz von mehreren verschiedenen Zusatzlösungen mehrere verschiedene überwachte Wasserparameter korrigierbar sein sollen.

Gemäß einer weiteren, in der Figur nicht näher gezeigten Ausführungsform kann die Anlage auch über einen Filter, mehrere Filter und/oder Filterschaltungen die Wasserinhaltsstoffe oder zu detektierenden Mikroorganismen oder Makro- und Mikrospurenelemente abfiltrieren und/oder anreichern. Für diese Zwecke können Feststofffiltrationselemente sowie ein Probenautosampler und automatisierbare Handlingeinrichtungen, in welchen die zu detektierenden Stoffe und Inhalte mittels Probenvorbereitung entweder angereichert, eluiert, gekoppelt nachführbar und/oder für die weitere Behandlung vorbereitet werden, vorhanden sein. Zum Probenhandler (Autosampler) sind einer oder mehrere Produkt-/Eluat-/Wirkstoff-/Probenaufbereitungsstoffe über Makro- und oder Mikrodosiersysteme im Bedarfsfall auch gekühlt oder erwärmt zuschleusbar (zuleitbar). Das zu detektierende Eluat wird einem Detektionssystem zugeführt. Detektionssystemen können sein: pH-Sonden, Temperatur-, Leitfähigkeits-, Redox-, UV-, Fluoreszenz-, Photo- oder videooptische, LED-optische Detektionseinheiten. Die Analyse- und/oder Detektionswerte können mittels Datenübertragung, z.B. M2M-Datenübertragung, auch an ein Rechenzentrum oder Rechen-PC übertragen oder im Modul selbst weiterverarbeitet und angewendet werden. Grenz- und Ist/Soll-Wert-Regelkreise beeinflussen die Wasserkonditionierungsparameter und deren Stellgrößen. Dies kann soweit geregelt sein, bis das Ziel der Wasserqualität und -konditionierung erfüllt ist oder in einem Erfüllungsfenster mit variablen Grenzwerten erreicht ist (steady-state). Bei Detektion zur Feststellung von minimalen oder maximalen Keimzahlen zu spezifizierender Mikroorganismen können die Mikroorganismen z.B. mittels UV- oder Fluoreszenz-mikroskopischer Detektion anhand ihrer Zellgeometrie (target) oder anhand spezifischer Metaboliten (non-target-Analyse) nachgewiesen werden.

In sogenannten offenen Kühlsystemen wird das im kreislaufgeführte Wasser durch Versprühen im Kühlturm abgekühlt. Dabei kommt es in intensiven Kontakt mit der Umgebungsluft. Darin enthaltenen Keime, Aerosole und Schmutzpartikel werden ins Kühlwasser eingetragen.

Dieser Eintrag von Keimen und Umgebungsschmutz, welcher mikrobiologisch verwertbare Nähstoffe enthält, das feuchtwarme Klima und das Vorliegen von oberflächenvergrößernden Einbauten und Füllkörpern zwecks verbesserter Kühlwirkung fördert in besonderem Maße die Keimvermehrung im Kühlwasser. Dabei stellt das Auftreten von human-pathogenen Keimen wie Legionella spec. und Pseudomonas aeruginosa für die Bevölkerung eine besondere Gefahr dar. Legionellen können in kleinen Aerosoltröpfchen durch den Luftstrom im Kühlturm in die Umgebung ausgetragen werden. Beim Einatmen dieser Tröpfchen können dann in Folge schwere Krankheiten wie Pontiac-Fieber oder Legionellose beim Menschen ausbrechen. Pseudomonas aeruginosa kann Wundkontakt-Krankheiten auslösen.

Deshalb haben Normungsgremien mit der VDI 2047/2 und auch der Gesetzgeber im Rahmen der aktuellen Verordnung zur Durchführung des Bundes-Immissionsschutzgesetzes, derzeit die 42. BImschVO, reagiert und umfassende mikrobiologische Untersuchungen für das Kühlwasser in diesen Kühlsystemen angeordnet.

Hier kann die erfindungsgemäße Anlage zur Wasserbehandlung und/oder Anlage zur Wasserqualitätssicherung durch Eingliederung eines Moduls zur automatischen Bestimmung von mikrobiologischen Belastungen des Kühlwassers den Betreiber vorbeugend unterstützen. Ein manuelles Eingreifen ist nicht erforderlich. Die Bestimmungen können in zeitlich festgelegten kurzen Intervallen mittels Durchflusscytometrie in Verbindung mit der Fluoreszenzmarkierung für lebende Zellen oder signifikante Keime automatisiert durchgeführt werden. Alternativ oder zusätzlich dazu kann eine Legionellen-Bestimmung in zeitliche Intervallen mit einer automatisierten Proben-Vorbereitungs- und Analysen-Methode analog bekannter manueller Legionellen-Schnelltests (z.B. Legipid^{®}) innerhalb der erfindungsgemäßen Wasserkonditionierungsanlage durchgeführt werden. Weiterhin können mikrobiologische Belastungen in zeitlichen Intervallen mit vollautomatischen Probenvorbereitung-, Färbungs- und direkt anschließenden mikroskopischen bildgebenden Verfahren quantifiziert werden.

Beim Überschreiten eines zuvor festgelegten Grenzwertes wird eine Alarmmeldung ausgelöst und der Betreiber kann früh- und rechtzeitig reagieren. Gleichzeitig dazu kann die Anlage selbsttätig die entsprechenden Gegenmaßnahmen durchführen, wie z. B. die Dosierung oder Anpassung der Dosiermenge eines geeigneten Biozidproduktes. Die Keimbelastung wird reduziert oder unterbunden und das Kühlsystem erreicht wieder den sicheren und regelkonformen Betrieb. Der Zeitraum, in dem sich gegebenenfalls das Kühlsystem im nicht-regelkonformen Zustand befindet, kann durch Einsatz der erfindungsgemäßen Anlage drastisch verkürzt werden.

Was oben im Hinblick auf Kühlsysteme und die Keimbelastung von Feuchtigkeitsnebel und Aerosolen ausgeführt wurde, gilt grundsätzlich auch für alle anderen Systeme, bei denen Feuchtigkeitströpfchen entstehen, die mit Menschen in Kontakt kommen, z.B. bei Autowaschanlagen.

Als weitere Einsatzmöglichkeit einer erfindungsgemäßen Anlage ist die Wasserqualitätskontrolle und Wasserqualitätskorrektur bzw. Wasser-Desinfektion auf See-, oder Binnen-Schiffen (Frischwassersystem, vielerlei Häfen mit unterschiedlichen, variablen Wasserbeschaffenheiten), Seefahrtgebäuden, Offshore-Anlagen zu nennen.

Außerdem eine Einsatzmöglichkeit zur Wasserqualitätskontrolle und Wasserqualitätskorrektur bzw. Wasser-Desinfektion in Linien-/Charterflugzeugen (vielerlei Flughäfen mit unterschiedlichen, variablen Wasserbeschaffenheiten). Ferner ist zu nennen die Wasserqualitätskontrolle und Wasserqualitätskorrektur bzw. Wasser-Desinfektion in Reisebussen (vielerlei Wasseraufnahmestationen mit unterschiedlichen, variablen Wasserbeschaffenheiten), sowie die Wasserqualitätskontrolle und Wasserqualitätskorrektur bzw. Wasser-Desinfektion in Hotelanlagen, Schulen, Krankenhäusern, Alters- und Pflegeheime, öffentlichen Einrichtungen, Wohngebäuden.

Sie kann weiterhin zur Wasserqualitätskontrolle und Wasserqualitätskorrektur bzw. Wasser-Desinfektion in stationären oder mobilen militärischen Einrichtungen mit Wasserversorgungsanlagen dienen.

Nachfolgend wird eine Ausführungsform einer Anlage gemäß der Figur unter Bezug auf die darin schematisch gezeigten Elemente noch ergänzend näher beschrieben, und zwar unter Diskussion ihrer Arbeitsweise, ihrer Funktionen und Vorteile.

Die Wände des Gehäuses 1 der erfindungsgemäßen Wasserkonditionierungsanlage sind vorzugsweise unter Verwendung eines dickwandigen Wärmeisoliermaterials hergestellt. Das Gehäuse 1 kann speziell für die erfindungsgemäße Anlage hergestellt werden, kann jedoch auch das Gehäuse einer für andere Zwecke vorgesehenen handelsüblichen Einrichtung sein. Es hat sich herausgestellt, dass schrankartige Gehäuse von Thermobehältern, die an sich für die Aufrechterhaltung der Kühlkette beim Transport von gekühlten Waren aus einem Kühlhaus zu Endverbrauchern verwendet werden, relativ einfach zu Gehäusen für eine erfindungsgemäße Wasserkonditionierungsanlage umgebaut werden können. Derartige Thermobehälter weisen in einer Standardausführung ein Innenvolumen von ca. 0,78 m³ (780 1) auf. Das Gehäuse 1 ist abschließbar, und zwar entweder mechanisch mit Schlössern und/oder Verriegelungen, oder auch elektronisch, und somit ist sein Inhalt vor unbefugtem Zugriff geschützt. Das Gehäuse 1 kann zum leichteren Transport der Wasserkonditionierungsanlage an ihren Installationsort mit Fahrrollen ausgestattet sein. Als zentralen Bauteil enthält die Anlage eine elektronische Steuereinheit 2, welche mit Hilfe einer geeigneten, dem Stand der Technik entsprechenden Technik für die Datenfernübertragung, z.B. einer Technik für die drahtlose Datenfernübertragung wie WLAN, GSM, GPRS, oder in einem Netzwerk (LAN) mit Festnetzübertragung, eine Ferndiagnose, -wartung und -steuerung des Betriebs der Anlage nach Maßgabe der in der Anlage erfassten Messgrößen ermöglicht. Ein verwendetes GPRS-Modul kann sich ohne jedwede Anmeldung im jeweils signalstärksten Datennetz selbständig einbuchen und Daten sofort übertragen bzw. Daten und Steuerungsbefehle annehmen, und dies weltweit, ohne Roamingregulierungen. Das einfache Power-On der Gesamtanlage reicht für die Aktivierung im Datennetz aus. Die Datenkommunikation erfolgt über eine abgesicherte Daten-Cloud. Ändern sich Vorgabewerte für die Wasserqualität oder die Wasserverwendung oder relevante Grenzwerte aufgrund von beispielsweise behördlichen Anordnungen, was gegebenenfalls zeitlich nicht vorhersehbar ist, können mittels der drahtlosen Datenfernübertragung GPRS von einer Überwachungs- und Steuerzentrale die Betriebsparameter der Wasserkonditionierungsanlage sofort und unmittelbar entsprechend angepasst werden, ohne dass sich jemand zum Ort der Anlage begeben muss und vor Ort manuell Justierungen vornehmen muss. Zum zuverlässigen Datenaustausch, auch unter schwierigen Empfangsbedingungen, dient eine externe Antenne 13.

Vor dem Einsatz der Wasserkonditionierungsanlage wird diese in die Verrohrung des zu behandelnden Trink- oder Brauchwasserflusses 8 fest installiert. Um die erforderlichen Parameter des Wassers, wie beispielsweise Durchfluss, pH-Wert, Leitfähigkeit, Ionen- und Wirkstoffkonzentrationen oder die mikrobiologische Belastung o.ä. zu bestimmen, dienen Messwertaufnehmer 3. Diese können entsprechend den benötigten Parametern in mehrfacher Ausführung vorhanden sein. Die ermittelten Daten werden als elektrische Signale zur Steuereinheit 2 geleitet und ausgewertet. Nach Maßgabe vorgegebener Sollwerte wird dann die Dosierpumpe 7 angesteuert, welche die benötigte Wirkstofflösung aus einem entsprechenden Vorratsbehälter, z.B. dem Vorratsbehälter 4, entnimmt und in den Wasserstrom in der Rohrleitung 8 eingibt. Der Füllstand des flüssigen Dosiermittels im Vorratsbehälters 4 wird mit einem geeigneten Füllstandsmesser 5 überwacht. Falls eine direkte Füllstandsmessung nicht möglich ist, kann alternativ dazu auch eine Wägeeinrichtung 6 eingesetzt werden. Die entsprechenden Werte werden an die Steuereinheit 2 übertragen und können dann für eine rechtzeitige Meldung zum Auffüllen oder Ersatz des Dosiermittelgebindes 4 genutzt werden. Der Vorratsbehälter 4 mit den Kontrolleinrichtungen 5 und/oder 6 ist in eine Auffangwanne 18 eingesetzt, damit ein Austritt von Dosiermittel im Havariefall keine Innenkontamination des Gehäuses 1 oder gar des Aufstellungsortes verursachen kann. Durch einen Sensor für Flüssigkeitsaustritt 19 wird der Havariefall an die Steuereinheit 2 gemeldet und löst dann einen entsprechenden Alarm in der Überwachungsstation aus.

Ist es nötig, in den Wasserstrom mehrere verschiedene Dosierflüssigkeiten in unterschiedlichen Mengen und Zeitintervallen zu dosieren, können die Konstruktionselemente Dosierpumpe 7, Vorratsbehälter 4 mit Inhaltsüberwachung 5 und 6 sowie die Auffangwanne 18 mit Sensor 19 erfindungsgemäß auch in mehrfacher paralleler Anordnung im Gehäuse 1 untergebracht, an die Steuereinheit 2 und den Wasserstrom 8 angeschlossen sein.

Bestimmte Dosierflüssigkeiten wie z. B. Natriumhypochlorit, Salzsäure oder Chlordioxidlösungen können unter ungünstigen Umständen gesundheitsschädliche, giftige oder korrosive Gase in den Innenraum der Anlage freisetzen. Damit sich diese Gase nicht im Innenraum des Gehäuses 1 anreichern können, ist eine Filter- bzw. Absorbereinheit 16 vorgesehen, welche derartige Gase aufnimmt, bindet und so unschädlich macht. Die Temperiereinheit 17 ermöglicht es, dass die Wasserkonditionierungsanlage auch unter ungünstigen äußeren Temperaturbedingungen sicher betrieben werden kann. Dafür können je nach Anforderungen und Klimaverhältnissen handelsübliche Peltierelemente und/oder Heizmodule eingesetzt werden.

Beim Einsatz der Wasserkonditionierungsanlage zur Behandlung von Betriebswasser für Kühlwasserkreisläufe ist es nötig, den Zufluss von Frischwasser 9 mit Hilfe eines von der Steuereinheit 2 geregelten Ventils 10 zu regeln. Zur Teilentleerung oder Absalzung 11 des Kühlwasserkreislaufs dient ebenso ein gesteuertes Ventil 12, über das Teilmengen des Betriebswassers abgeführt werden können.

Die Wartung, Kalibrierung und weitere Arbeiten an der Wasserkonditionierungsanlage werden durch die Steckdosen 14 zum temporären Anschluss von Laptop und Wartungsgeräten sowie eine Innenraum-Beleuchtung 15 erleichtert. Die Stromversorgung 20 vervollständigt die Anlage.

Je nach Anforderung können verschiedene Ausführungen der erfindungsgemäßen Anlagen auch kombiniert werden, z.B. in Reihe oder parallel. Das ermöglicht es beispielsweise, unterschiedliche, nicht zusammen lagerbare Chemikalien und Ausgangsstoffe ohne unerwünschte gegenseitige Beeinflussung oder Wechselwirkungen unabhängig voneinander sicher zu lagern und getrennt einzudosieren. Dabei können auch unterschiedliche Anforderungen an die Filter- und Absorbereinrichtungen sachgemäß berücksichtigt werden.

## Patentansprüche

1. Anlage zur Wasseranalyse und zur Behandlung von Trink- und/oder Betriebswasser und/oder Badebeckenwasser, in der Wasserparameter messtechnisch überwacht und durch Zudosierung von geeigneten chemischen Zusätzen und/oder durch Maßnahmen zur Abtrennung partikelförmiger Wasserinhaltsstoffe in einem vorgegebenen Bereich gehalten werden, wobei sie aufweist
- ein Gehäuse (1), durch das ein Abschnitt einer wasserführenden Rohrleitung (8) geführt wird, die beim Einsatz der Anlage mit außerhalb des Gehäuses liegenden Rohrleitungsabschnitten der Verrohrung des zu behandelnden Trink- und/oder Betriebswasser und/oder Badebeckenwassers verbunden ist, und in dem außerdem angeordnet sind
- Messwertaufnehmer (3) zur analytischen Messung eines oder mehrerer vorgegebener Parameter des durch die wasserführende Rohrleitung (8) strömenden Wassers,
- eine Steuereinheit (2), der die gemessenen Parameter des Wassers in Datenform zugeführt werden, und die anhand der ermittelten analytischen Daten die dosierte Zugabe von einer oder mehreren wässrigen Konditionierlösungen aus im Gehäuse (1) angeordneten Vorratsbehältern (4) in das Wasser in der Rohrleitung (8) bewirkt und/oder eine Maßnahme zur mechanischen Abtrennung von partikelförmigen Wasserinhaltsstoffen einleitet,
- wobei die Steuereinheit (2) die Betriebsdaten der Wasserkonditionierungsanlage verarbeitet und mittels Datenfernübertragung an eine externe Wartungsstation übermittelt und von dort steuer- und kontrollierbar ist **dadurch gekennzeichnet, dass** das Gehäuse ein vor unbefugtem Zugriff gesichertes, geschlossenes Gehäuse (1) ist, dass die Wände des Gehäuses (1) thermoisolierend sind, und dass der Innenraum des Gehäuses (1) klimatisiert ist, indem er temperaturgeregelt ist und/oder einen geregelten Feuchtigkeitsgehalt aufweist.

2. Anlage nach Anspruch 1, **dadurch gekennzeichnet, dass** der oder die Vorratsbehälter (4) für die Konditionierungslösungen mit einer Füllstandsüberwachung (5,6) versehen sind, die Daten zum Füllstand erzeugt und an die Steuereinheit (2) liefert.

3. Anlage nach Anspruch 1 oder 2, **dadurch gekennzeichnet, dass** der oder die Vorratsbehälter (4) in einer Auffangeinrichtung (18) für austretende Konditionierungslösung angeordnet sind und mit einer Leckageüberwachung (19) ausgerüstet sind.

4. Anlage nach einem der vorausgehenden Ansprüche 1 bis 3, **dadurch gekennzeichnet, dass** sie eine Filter- und Absorbereinrichtung (16) aufweist, von der gesundheitsschädliche und/oder korrosive Gase und Dämpfe im Innenraum der Wasserkonditionierungsanlage gebunden und damit unschädlich gemacht und an einem Austritt in die Umgebung des Gehäuses (1) gehindert werden können.

5. Anlage nach einem der vorausgehenden Ansprüche 1 bis 4, **dadurch gekennzeichnet, dass** der im Gehäuse (1) angeordnete Abschnitt der wasserführenden Rohrleitung eine Gesamtlänge aufweist, die erheblich länger ist als eine gerade Dimension des Gehäuses (1).

6. Anlage nach Anspruch 5, **dadurch gekennzeichnet, dass** der im Gehäuse (1) angeordnete Abschnitt der wasserführenden Rohrleitung eine Rohrleitungsschleife ist, die über benachbarte Ein- und Austrittsstellen in der gleichen Gehäusewand mit Rohrleitungsabschnitten außerhalb des Gehäuses (1) verbindbar ist.

7. Anlage nach einem der Ansprüche 1 bis 6, **dadurch gekennzeichnet, dass** mittels des einen oder mehrerer Messwertaufnehmer (3) zur analytischen Messung eines oder mehrerer vorgegebener Parameter des durch die wasserführende Rohrleitung (8) strömenden Wassers chemische, physikalische und/oder mikrobiologische Parameter des Wassers in der Rohrleitung bestimmt werden.

8. Anlage nach einem der vorausgehenden Ansprüche 1 bis 7, **dadurch gekennzeichnet, dass** die Datenfernübertragung mittels einer Technik zur drahtlosen Datenfernübertragung und/oder in einem verkabelten Netzwerk mit Direktverbindungen erfolgt.

## Claims

1. System for analyzing water and for treating drinking and/or process water and/or swimming pool water, in which water parameters are metrologically monitored and are kept within a predetermined range by the metered addition of suitable chemical additives and/or by measures for separating particulate water constituents, the system comprising
- a housing (1), through which a portion of a water-carrying pipeline (8) is guided, which, when the system is in use, is connected to pipeline portions of the piping of the drinking and/or process water and/or swimming pool water to be treated, said pipeline portions being located outside the housing, and which also accommodates
- a transducer (3) for analytically measuring one or more predetermined parameters of the water flowing through the water-carrying pipeline (8),
- a control unit (2) to which the measured parameters of the water are supplied in data form, and which, on the basis of the determined analytical data, effects the metered addition of one or more aqueous conditioning solutions from storage containers (4) arranged in the housing (1) into the water in the pipeline (8) and/or initiates a measure for mechanically separating particulate water constituents,
- wherein the control unit (2) processes the operating data of the water conditioning system and, by means of remote data transmission, transmits the data to an external maintenance station from where it can be controlled and managed,
**characterized in that** the housing is a closed housing (1) secured against unauthorized access, **in that** the walls of the housing (1) are thermally insulating, and **in that** the internal space of the housing (1) is air-conditioned by being temperature-controlled and/or having a controlled humidity content.

2. System according to claim 1, **characterized in that** the storage container or containers (4) for the conditioning solutions are provided with a fill level monitoring device (5, 6) which generates data on the fill level and supplies it to the control unit (2).

3. System according to claim 1 or 2, **characterized in that** the storage container or containers (4) are arranged in a collecting device (18) for escaping conditioning solution and are equipped with a leakage monitoring device (19).

4. System according to any one of preceding claims 1 to 3, **characterized in that** it has a filter and absorber device (16) which can absorb gases and vapors, which are harmful to health and/or corrosive, in the internal space of the water conditioning system and thus render them harmless and prevent them from escaping into the environment of the housing (1).

5. System according to any one of preceding claims 1 to 4, **characterized in that** the portion of the water-carrying pipeline that is arranged in the housing (1) has an overall length which is considerably longer than a straight dimension of the housing (1).

6. System according to claim 5, **characterized in that** the portion of the water-carrying pipeline that is arranged in the housing (1) is a pipeline loop which can be connected to pipeline portions outside the housing (1) via adjacent entry and exit points in the same housing wall.

7. System according to any one of claims 1 to 6, **characterized in that** chemical, physical and/or microbiological parameters of the water in the pipeline are determined by means of the one or more transducers (3) for analytically measuring one or more predetermined parameters of the water flowing through the water-carrying pipeline (8).

8. System according to any one of preceding claims 1 to 7, **characterized in that** the remote data transmission is carried out by means of a technique for wireless remote data transmission and/or in a wired network with direct connections.

## Revendications

1. Installation pour l'analyse de l'eau et le traitement de l'eau potable et/ou de l'eau de service et/ou de l'eau de bassin de baignade, dans laquelle les paramètres de l'eau sont surveillés par des techniques de mesure et sont maintenus dans une plage prédéfinie par l'ajout dosé d'additifs chimiques appropriés et/ou par des mesures de séparation des substances contenues dans l'eau sous forme de particules, comprenant
- un boîtier (1) à travers lequel passe un tronçon d'un conduit tubulaire de circulation d'eau (8) qui, lors de l'utilisation de l'installation, est relié à des tronçons de conduit tubulaire de la tuyauterie de l'eau potable et/ou de l'eau de service et/ou de l'eau de bassin de baignade à traiter, qui sont situés à l'extérieur du boîtier dans lequel sont en outre disposés
- des capteurs de mesure (3) pour la mesure analytique d'un ou de plusieurs paramètres prédéterminés de l'eau s'écoulant à travers le conduit tubulaire de circulation d'eau (8),
- une unité de commande (2) à laquelle les paramètres mesurés de l'eau sont transmis sous forme de données et qui, à l'aide des données analytiques déterminées, provoque l'ajout dosé d'une ou plusieurs solutions de conditionnement aqueuses, provenant de réservoirs (4) disposés dans le boîtier (1), dans l'eau située dans le conduit tubulaire (8) et/ou déclenche une mesure de séparation mécanique de substances contenues dans l'eau sous forme de particules,
- l'unité de commande (2) traitant les données de fonctionnement de l'installation de conditionnement de l'eau et les transmettant par télétransmission de données à une station de maintenance externe, d'où elle peut être commandée et contrôlée,
**caractérisée en ce que**
le boîtier est un boîtier (1) fermé, protégé contre tout accès non autorisé, **en ce que** les parois du boîtier (1) sont thermo-isolantes, et
**en ce que** le volume intérieur du boîtier (1) est climatisé en étant régulé en température et/ou en présentant un taux d'humidité régulé.

2. Installation selon la revendication 1,
**caractérisée en ce que** le ou les réservoirs (4) pour les solutions de conditionnement sont pourvus d'un dispositif de surveillance du niveau de remplissage (5, 6) qui génère des données concernant le niveau de remplissage et les fournit à l'unité de commande (2).

3. Installation selon la revendication 1 ou 2,
**caractérisée en ce que** le ou les réservoirs (4) sont disposés dans un dispositif de collecte (18) pour la solution de conditionnement qui s'échappe et sont équipés d'un dispositif de surveillance des fuites (19).

4. Installation selon l'une des revendications précédentes 1 à 3,
**caractérisée en ce qu'**elle comprend un dispositif de filtrage et d'absorption (16), par lequel des gaz et des vapeurs nocifs et/ou corrosifs dans le volume intérieur de l'installation de conditionnement d'eau peuvent être liés et ainsi rendus inoffensifs et empêchés de s'échapper dans l'environnement du boîtier (1).

5. Installation selon l'une des revendications précédentes 1 à 4,
**caractérisée en ce que** le tronçon, disposé dans le boîtier (1), du conduit tubulaire de circulation d'eau présente une longueur totale considérablement supérieure à une dimension rectiligne du boîtier (1).

6. Installation selon la revendication 5,
**caractérisée en ce que** le tronçon, disposé dans le boîtier (1), du conduit tubulaire de circulation l'eau est une boucle de conduit tubulaire qui peut être reliée à des tronçons de conduit tubulaire, situés à l'extérieur du boîtier (1), par des points d'entrée et de sortie voisins dans la même paroi du boîtier.

7. Installation selon l'une des revendications 1 à 6,
**caractérisée en ce que** des paramètres chimiques, physiques et/ou microbiologiques de l'eau située dans le conduit tubulaire sont déterminés au moyen d'un ou de plusieurs capteurs de mesure (3) pour la mesure analytique d'un ou de plusieurs paramètres prédéterminés de l'eau s'écoulant à travers le conduit tubulaire de circulation d'eau (8).

8. Installation selon l'une des revendications précédentes 1 à 7,
**caractérisée en ce que** la télétransmission de données est effectuée au moyen d'une technique de télétransmission de données sans fil et/ou dans un réseau câblé avec des connexions directes.
